Europäisches Patentamt

European Patent Office

Office européen des brevets

(19)

(11) Veröffentlichungsnummer: **0 077 023**
**B2**

(12) ## NEUE EUROPÄISCHE PATENTSCHRIFT

(45) Veröffentlichungstag der neuen Patentschrift:
**04.04.90**

(21) Anmeldenummer: **82109247.5**

(22) Anmeldetag: **06.10.82**

(51) Int. Cl.⁵: **C 08 L 63/00,** C 09 D 163/00,
C 09 D 5/44, C 09 D 163/10

(54) **Verfahren zur Herstellung wärmehärtbarer, mit Wasser verdünnbarer Lacke und deren Verwendung für Beschichtungen.**

(30) Priorität: **07.10.81 US 309505**

(43) Veröffentlichungstag der Anmeldung:
**20.04.83 Patentblatt 83/16**

(45) Bekanntmachung des Hinweises auf die
Patenterteilung:
**30.07.86 Patenblatt 86/31**

(45) Bekanntmachung des Hinweises auf die
Entscheidung u̇ber den Einspruch:
**04.04.90 Patentblatt 90/14**

(84) Benannte Vertragsstaaten:
**AT BE CH DE FR GB IT LI NL SE**

(56) Entgegenhaltungen:
**EP-A-0 015 035**
**EP-A-0 049 868**
**AT-B- 337 849**
**DE-A-2 613 099**
**US-A-3 493 414**

(73) Patentinhaber: **HOECHST**
**AKTIENGESELLSCHAFT**
**Postfach 80 03 20**
**D-6230 Frankfurt am Main 80 (DE)**

(72) Erfinder: **Johannes, Gerhard**
**Breslauer Strasse 6**
**D-6204 Taunusstein (DE)**
Erfinder: **Dürr, Helmut, Dr.**
**Hansaallee 111**
**D-6000 Frankfurt am Main (DE)**
Erfinder: **Plath, Dieter, Dr.**
**Hildastrasse 32**
**D-6200 Wiesbaden (DE)**
Erfinder: **Schneider, Diedrich**
**Am Rosenhang 10**
**D-6200 Wiesbaden (DE)**
Erfinder: **Esser, Klaus**
**Habichtsthalerweg 8**
**D-8752 Heinrichsthal (DE)**

Courier Press, Leamington Spa, England.

**Beschreibung**

Die Erfindung betrifft ein Verfahren zur Herstellung von wärmehärtbaren mit Wasser verdünnbaren Lacken und deren Verwendung für Beschichtungen, insbesondere von metallischen Substraten, durch Einsatz stromloser Auftragsmethoden — wie Spritzen, Tauchen, Fluten, Walzen — und das elektrostatische Sprühverfahren.

In der Industrie wird bei der Lackierung vielfach nach dem Arbeitsablauf Auftrag-Vernetzung-Schleifen-Überlackierung vorgegangen, und zwar insbesondere bei der Fahrzeuglackierung, vor allem der Lackierung von Personenkraftwagen.

Aus DE—A—22 48 836 ist bekannt, Lacke für das elektrolytische Abscheidungsverfahren durch folgende Maßnahmen herzustellen, die eng mit der Pulverlackherstellung verbunden sind:

1. Vermischen der Komponenten des Pulverlackes;
2. Extrusion des Gemisches;
3. Kühlung des Extrudates;
4. Mahlung des Extrudates zu einem Pulverlack mit maximalen Korngrößen von 100 µm;
5. Eintragen des gemahlenen Pulverlackes in ein kationisches Bindemittel;
6. Homogenisieren;
7. Einstellung des Lackes mit Wasser auf den gewünschten Feststoffgehalt für den elektrolytischen Auftrag.

Die so hergestellten Lacke bestehen aus einem als Bindemittel dienenden kationischen Harz sowie einem pulverförmigen nicht-ionogenen Harz, das übliche Zusatzstoffe wie Pigmente enthält und die in getrennten Operationen hergestellt und zu dem Anstrichmittel verarbeitet werden. Mit diesen Lacken lassen sich Schichten mit einer Dicke von mehr als 30 µm erhalten.

Aus Modern Paint Coating, 1979, *69* (6), 53—55 (CIBA-GEIGY, Schweiz) ist weiter bekannt, Überzugsmassen für stromlose Applikationsverfahren oder für das elektrostatische Beschichtungsverfahren — in ähnlicher Weise wie in DE—A—22 48 836 beschrieben — zu erzeugen, nämlich durch die oben genannten Maßnahmen 1 bis 4 und 7 und folgende weitere Maßnahmen:

5a. Aufschlämmung des Pulverlackes in Wasser;
6a. Feinmahlung des Gemisches Pulverlack-Wasser in einer Perlmühle.

Bei dem bekannten Verfahren wird stets erst ein Pulverlack erzeugt, der bei Herstellung im Extruder im allgemeinen Temperaturen von 100 bis 130°C durchläuft, und zwar für eine Dauer, die von den Extrusionsparametern Temperatur und Friktion abhängig ist. Bei dieser Temperatur tritt im allgemeinen eine Vorreaktion ein, die eine Erhöhung der Schmelzviskosität und damit schlechtes Verlaufen und ungenügende Substratbenetzung verursacht und sich so bei der späteren Verarbeitung auf die Filmbildung aus den Lacken nachteilig auswirkt. Außerdem ist eine Einbuße an mechanischen Festigkeiten der Lackschichten bei der schlagartigen Verformung bzw. bei der Dehnbarkeit zu beobachten. Auch die Beständigkeit gegen korrosive Einflüsse wird beeinträchtigt. Die Nachteile bei der Filmbimdung wirken sich auch unvorteilhaft bei der weiteren Bearbeitung der nach dem elektrolytischen Auftrag und der chemischen Vernetzung erhaltenen Überzüge aus, z.B. wenn man die Welligkeit der Oberfläche durch Schleifen reduzieren will. Die Schleifarbeit ist naturgemäß um so größer, je welliger die Oberfläche ist, d.h. je schlechter der Lack verlaufen ist. Das Schleifen ist jedoch erforderlich, um den nachfolgend aufgetragenen Lackschichten mit dekorativer Funktion ein möglichst einwandfreies optisches Aussehen zu verleihen.

Mit den aus DE—A—22 48 836 bekannten Lacken werden jedoch Überzugsfilme erhalten, die wegen der bereits beschriebenen Nachteile für eine breite Anwendung in der Praxis nicht in Betracht kommen, obwohl die Nachfrage erheblich ist.

DE—A—26 06 284 beschreibt ein Verfahren zur Herstellung wäßriger Epoxydharzemulsionen aus einer Epoxydverbindung und einer Wasserlöslichen Polyhydroxylcarboxylverbindung, wobei letztere Verbindungen Polyester darstellen mit einem mittleren Molekulargewicht von mindestens 1000, einer Säurezahl von 10—200 und einer Hydroxylzahl von 20—500. Diese Mischung kann auch Pigmente und gegebenenfalls Farbstoffe und/oder Füllstoffe enthalten sowie wassertolerante Lösungsmittel, wobei alle Komponenten zusammen vermahlen und anschließend in Wasser emulgiert werden.

Die genannten niedermolekularen Polyester sind aufgrund ihrer Struktur wasserlöslich, wobei jedoch keine Umsetzung unter partieller oder vollständiger Salzbildung erfolgt ist. Der in DE—A—26 06 284 genannte Mahlprozeß wird nicht zur Zerkleinerung der eingesetzten festen Komponenten benötigt, sondern dient nur dazu, die beigefügten Pigmente zu benetzen; es handelt sich dabei um das bekannte "Anreiben" einer Pigmentmischung. Die lackbildenden Komponenten liegen in dieser Umsetzung nur emulgiert oder gelöst vor.

FR—A—1 230 708 beschreibt Überzugsmittel und Lacke, die aus einem in einem Lösungsmittel löslichen, ölmodifizierten Alkydharzhalbester (Säurezahl 80—120), einem epoxydierten fetten Öl und einem zur Salzbildung befähigten Inhibitor bestehen, wobei der Inhibitor eine Reaktion zwischen der Säuregruppe des modifizierten Alkyldesters und dem Oxiransauerstoff der Epoxybindung verhindern soll. Dieser Mischung können zur Herstellung eines Lackes auch Pigmente und Farbstoffe zugesetzt werden. Der genannte Inhibitor, Ammoniak oder ein Amin, dient dazu, die Säuregruppen des Alkydharzhalbesters zu neutralisieren und die Mischung aus dem Ester und dem epoxydierten Öl wasserlöslich oder

2

wasserdispergierbar zu machen. Diese Mischungen werden dann entweder mit einem wasserlöslichen Melaminformaldehydharz versetzt oder mit Pigmenten und Farbstoffen in der Mühle gemahlen, wobei unter Mahlen wieder nur ein "Anreiben" zu einem Lack zu verstehen ist.

Aus FRA—A—2 344 611 ist ein Überzugsmittel auf der Basis von wäßrigen Emulsionen oder Lösungen in organischen Lösungsmittel bekannt, wobei das Bindemittel aus zwei verschiedenen Polyestern, Amino-Formaldehyd-Kondensaten als Vernetzungskomponente, festen oder flüssigen Epoxydharzen und einer organischen oder anorganischen Säure besteht. Daneben können auch Pigmente und Farbstoff in dem Gemisch der obengenannten Komponenten dispergiert werden. Die genannten Bindemittel werden aus den Komponenten A) bis E) durch Einrühren von Wasser zu einer wäßrigen Emulsion bzw. durch Verdünnen mit organischen Lösungsmittel zu einer homogenen Harzlösung verarbeitet. Bei dem auch hier angeführten Mahlen handelt es sich um das bekannte "Anreiben".

Aus EP—A—15035 sind weiterhin Überzugsmischungen auf der Grundlage eines Wasserverdünnbaren maleinisierten Öls bekannt, die dadurch gekennzeichnet sind, daß sie ein Bindemittel enthalten, das aus 30—95 Gew.-% des wasser-verdünnbaren maleinisierten Öls und 5—70 Gew.-% einer festen, zerkleinerten epoxydgruppen-haltigen Verbindung mit einer Teilchengröße von 0,5—35 µm, einem durchschnittlichen Molekulargewicht von mindestens 1000 und einem Epoxyäquivalentgewicht von 450—7500 aufgebaut ist, wobei die Angaben der Gewichtsprozente auf die Summe der beiden lösungsmittelfreien Komponenten bezogen sind. Bei der Herstellung des maleinisierten Öles wird ein 2,5- bis mehr als 5-facher Überschuß an Maleinsäureanhydrid gegenüber dem eingesetzten ungesättigten Fettsäureester angewandt, so daß eine große Anzahl von funktionellen Hydroxylgruppen für weitere Umsetzungen zur Verfügung steht.

Demgegenüber sieht die Erfindung die Herstellung von Lacken vor, die gegenüber den fünf erstgenannten Entgegenhaltungen erheblich vereinfacht ist, die die in Zusammenhang mit diesen Literaturstellen genannten Nachteile nicht aufweisen und zudem Verbesserte Eigenschaften haben. Die Vorteile des erfindungsgemäßen Verfahrens gegenüber den genannten Literaturstellen bestehen darin, daß nach dem erfindungsgemäßen Verfahren keine Reaktion der Komponenten während der Verarbeitung eintreten kann, weil im Gegensatz zu dem genannten Stand der Technik bei so niedrigen Temperaturen gearbeitet wird, daß ein Aufschmelzen der Reaktionskomponenten und damit eine Vorreaktion, die bekanntlich in der Flüssigphase wesentlich schneller in Gang kommt als im festen Zustand, vermieden wird. Ein weiterer Vorteil besteht in einem wesentlich geringeren Aufwand für die Reinigung der verwendeten Apparaturen, da das Reaktionsprodukt oder Teile davon unter den verwendeten Temperaturen an den Wandungen der Verarbeitungsgefäße nicht ansetzen bzw. anbacken.

Weiter ist von Vorteil, daß technologisch und ökonomisch aufwendige Verfahrensschritte eliminiert werden können. Schließlich unterscheiden sich die durch das erfindungsgemäße Verfahren erhaltenen Lacke vom Stand der Technik auch dadurch, daß während der Fertigung Korrekturen an der Lackrezeptur durchgeführt werden können, und zwar ohne Wiederholung aufwendiger Verfahrensschritte.

Gegenstand der Erfindung ist ein Verfahren zur Herstellung wärmehärtbarer mit Wasser verdünnbarer Lacke auf der Grundlage von

A) 1—90 Gew.-% mindestens eines bei Raumtemperatur festen, von Aminogruppen freien Epoxydharzes,

B) 10—90 Gew.-% mindestens eines Kunstharzes mit funktionellen Gruppen,

C) 0,05—40 Gew.-% mindestens eines bei Raumtemperatur festen und/oder flüssigen organischen Vernetzers und

D) 0—75 Gew.-% Pigmenten und/oder üblichen Hilfsstoffen, wobei die Komponenten A) bis D), deren Summe stets 100 Gew.-% beträgt und deren Mengen auf lösungsmittel- oder wasserfreie Substanzen bezogen sind, gemeinsam in einer oder mehreren Stufen unter Verkleinerung der ursprünglichen Partikelgröße zu einem homogenen Lack verarbeitet werden, der eine Teilchengröße von weniger als 100 µm aufweist und wobei anschließend, falls erforderlich, mit Wasser auf den für den Auftrag erforderlichen Feststoffgehalt eingestellt wird, das dadurch gekennzeichnet ist, daß die Komponente B) mindestens ein gesättigtes (das ist nicht-polymerisierbares) säurefunktionelles, aus C, H und O bestehendes Polyesterharz oder dessen Modifikationsprodukt mit Ölen ist, wobei das Polyesterharz gegebenenfalls wenigstens teilweise mit Aminen neutralisiert ist, eine Säurezahl von mindestens 30 und im allgemeinen nicht über 120 und eine OH-Zahl von 10 bis weniger als 100 hat und bei dem wenigstens teilweise neutralisierten Polyesterharz die Summe von Säurezahl und Hydroxylzahl wenigstens so groß ist, daß eine stabile wäßrige Dispersion oder Lösung gebildet wird. Wenn in mehreren Stufen gearbeitet wird, sollen die Komponenten in wenigstens einer Stufe gemeinsam verarbeitet werden.

Das erfindungsgemäße verfahren kann diskontinuierlich oder, was bevorzugt ist, kontinuierlich durchgeführt werden. Dabei werden die festen Ausgangsstoffe zusammen mit den anderen Komponenten sowie gegebenenfalls Mahlflüssigkeiten in geeigneten Aggregaten vermahlen. Im allgemeinen werden die festen Ausgangsstoffe als grob zerkleinert Materialien in den Mahlgang gegeben, jedoch können ebenso bereits vorher zerkleinerte Stoffe eingesetzt werden. Dabei wird mindestens eine Stufe im Naßverfahren durchgeführt. Die Konzentration des Mahlgutes ist dabei von der Viskosität des Gutes abhängig, seine Pumpfähigkeit muß erhalten bleiben. Im Allgemeinen besitzen derartige Mahlteige Festkörpergehalte bis zu 80, vorzugsweise bis zu 50 Gew-%. Anschließend wird die erhaltene Lackmischung mit Wasser zu einer Dispersion auf den gewünschten Feststoffgehalt von im allgemeinen 5 bis 80, vorzugsweise 5 bis 40 Gew.-

% eingestellt, sofern sie diesen noch nicht besitzt. Zwickmäßig erfolgt die Vermahlung bei Temperaturen von 0—70°C unter Vermeidung von Überhitzungen.

Die Teilchengröße der festen Bestandteile des Lackes soll nach beendeter Mahlung nicht mehr als 15, insbesondere nicht mehr als 5 μm·betragen.

Als Aggregate für die Verkleinerung der Partikelgröße sind beispielsweise Schwing-, Prallteller-, Stift-, Hammer-, Luftstrahl-, Planetkugel- und Sichtermühlen sowie Rührwerkskugelmühlen wie Sand- und Perlmühlen, Kolloidmühlen und Extruder geeignet, die einzeln oder in Kaskadenform arbeiten können, wobei auch die Möglichkeit von Kombinationen der verschiedenen Mühlentypen besteht. Im Naßverfahren wird als flüssige Phase vorzugsweise Wasser eingesetzt.

Das Epoxydharz A) ist bei Raumtemperatur fest, schmilzt und verläuft bei der Vernetzungstemperatur, ist somit schichtbildend und verleiht der Lackierung Korrosionsfestigkeit sowie Schlagfestigkeit. Vorzugsweise eignen sich Epoxydharz, die auf der Basis von Diphenylolpropan (Bisphenol A) und/oder Diphenylolmethan (Bisphenol F) und Epihalogenhydrin und/oder Methylepithalogenhydrin, vorzugsweise Epichlorhydrin nach dem in der Literatur (siehe z.B. "Epoxydverbindungen und Epoxydharz", Paquin [1958], S. 322 ff) beschriebenen Ein- oder Zweistufenverfahren hergestellt werden können, z.B. solche mit einem Erweichungspunkt (EP) nach Durrans von mindestens 70°C und einem Epoxydäquivalentgewicht (EÄ) von mindestens 490; z.B. sind Produkte mit EP 93—104°C und EÄ 875 bis 1000 und EP 118°C und EÄ 1865 geeignet. Die Komponente A) wird vorzugsweise in Mengen von 5 bis 50 und insbesondere von 10 bis 40 Gew.-% eingesetzt. Diese und die weiterhin genannten Mengenverhältnisse beziehen sich stets auf 100 Gew.-% der Komponenten A)—D).

Das gesättigte Polyesterharz der Komponente B), das vorzugsweise eine Säurezahl von 45 bis 80 hat, ist mindestens ein intermolekular vernetzendes, wärmehärtbares, funktionelle Gruppen enthaltendes Harz, das — zusammen mit etwa vorhandem Aminharz der Komponente C) — das Bindemittel für alle im Lack enthaltenen Komponenten darstellt und vorzugsweise als wäßrige Lösung oder Dispersion in Mengen von 10 bis 70 und insbesondere von 15 bis 50 Gew.-% (festkörper) eingesetzt wird. Es liegt — im allgemeinen bei Raumtemperatur — dann in wäßriger Lösung oder Dispersion vor, die vorzugsweise einen Feststoffgehalt von 20 bis 70 Gew-% haben und als Lösungsmittel Wasser und gegebenenfalls mindestens ein verträgliches organisches Lösungsmittel in untergeordneter Menge enthalten wei wasserlösliche Alkohole, z.B. Methanol, Äthanol, n- und iso-Propanol, Glykolmonoäther und Ketone.

Geeignet sind auch solche Polyesterharze, die sowohl Carboxyl- als auch Hydroxylgruppen im Molekül enthalten. Diese können daher sowohl inter- wie auch intramolekular vernetzt werden, was abhängig von der Relation der vorhandenen OH-Gruppen zu den verfügbaren COOH-Gruppen ist. Die Herstellung solcher Produkte ist z.B. in GB—A—356 758 und 422 130 beschrieben.

Polyesterharz, die als Komponente B) geeignet sind, lassen sich nach üblichen Verfahren aus Polycarbonsäuren und mehrwertigen, zum Teil mindestens dreiwertigen Alkoholen herstellen. Geeignete Carbonsäuren sind aliphatischer, cycloaliphatischer und/oder aromatischer Natur, vorzugsweise Di-, Tri- und gegebenenfalls Tetracarbonsäuren mit z.B. 4 bis 12 C-Atomen pro Molekül bzw. deren Anhydride, soweit sie existieren, oder Ester. Im einzelnen seien z.B. genannt ortho-, iso- und Terephthalsäure, Hexahydrophthalsäure, Trimellith-, Pyromellith-, Bernstein-, Adipin- und Sebazinsäure bzw. deren Anhydride, soweit sie existieren.

Geeignete alkoholische Komponenten sind mehrwertige Alkohole, und zwar zweiwertige Alkohole wie Äthan-, 1,2- bzw. 1,3-Propandiol die verschiedenen Butan-, Pentan- und Hexandiole wie Butandiol-1,4, Neopentylglykol und Hexandiol-1,6, Di- und Triäthylenglykol, oxäthylierte und perhydrierte Bisphenole, Trimethyloläthan und -propan, Glycerin und Pentaerythrit.

Gegebenenfalls können sowohl der Säurekomponente als auch der Alkoholkomponente kettenabbrechende einwertige Verbindungen, nämlich Monocarbonsäuren wie Benzoesäure oder einwertige Alkohole wie die verschiedenen Propanole, Butanole, Cyclohexanol und Benzylalkohol zugefügt werden.

Als Modifikationsprodukte mit Ölen kommen z.B. solche in Frage, die mit Fettsäureestern wie Leinöl, Sojaöl, Saffloröl, Rinzinusöl, Baumwollsaatöl, Erdnußöl bzw. den zugrundeliegenden Fettsäuren wie Lein-, Soja- und Safflorölfettsäure erhalten worden sind. Auch eine Modifizierung durch Produkte, die durch Dimerisierung aus natürlichen ungesättigten Ölen oder Fettsäuren gewonnen sind, ist möglich, ferner vor allem gesättigte Fettsäuren wie Kokosfettsäure.

Zur Neutralisation des Polyesterharzes eignen sich die Amine, die bei der Herstellung von wasserlöslichen Systemen gewöhnlich verwendet werden, z.B. Triäthylamin.

Als Vernetzerkomponente C) eignen sich z.B. Imidazol und 2-Imidazolin sowie deren Derivate und Addukte mit Epoxydverbindungen, z.B. den oben genannten, Dicyandiamid, substituierte Biguanide und Aminharze wie Melamin- und Harnstoffharze. Diese Verbindungen C) werden allein oder als Mischungen in Mengen von z.B. 0,05 bis 40 vorzugsweise 0,1 bis 30 Gew.-% dem Ansatz sugefügt. Sofern die Komponente C) aus Harzen besteht, beträgt deren Anteil im allgemeinen 8 bis 40, vorzugsweise 15 bis 30 Gew.-%, während dann, wenn die Komponente C) aus anderen Stoffen besteht, deren Anteil 0,05 bis 8 Gew.-% beträgt. In Kombinationen verschiedener Komponenten C) ist natürliche ein kleinerer Harzanteil als 8 Gew.-% möglich.

Bei dem erfindungsgemäßen Verfahren können dem Lack als Komponente D) Pigmente und übliche Hilfsstoffe zugesetzt werden.

4

Die Pigmentierung wird unter Verwendung anorganischer und/oder organischer Pigmente, beispielsweise Titandioxyd und Ruß durchgeführt, wobei der Anteil 70, vorzugsweise 50 Gew.-% nicht übersteigen soll. Ruß ist dabei in Mengen von nicht mehr als 10, vorzugsweise nicht mehr als 5 Gew.-% enthalten.

Übliche Hilfsstoffe sind z.B Verlaufmittel und Netzmittel wie Silikonöle und -harz, Polyacrylate wie Poly-n-butylacrylat und Poly-2-äthyl-hexylacrylat, Cellulose-acetobutyrat und das Umsetzungsprodukt aus 2 Mol Methyl-Iosbutyl-Keton und Acetylen. Diese Hilfsstoffe werden im allgemeinen in Mengen bis zu 5, vorzugsweise bis zu 1 Gew.-% eingesetzt. Ein weiterer Hilfsstoff ist fein teilige Kieselsäure, d.h. solche mit großer Oberfläche, die in Mengen bis zu 10, vorzugsweise von 0,5 bis 5 Gew.-% als Thixotropiermittel bzw. als Mittel gegen Sedimentation zugegeben werden kann.

Die mit Hilfe des erfindungsgemäßen Verfahrens erhaltenen Lacke eignen sich z.B. vorzugsweise hervorragend für die stromlose bzw. elektrostatische Beschichtung von metallischen Substraten.

Als Auftragsmethoden für die erfindungsgemäß erhaltenen Lacke eignen sich außer dem elektrostatischen Auftragsverfahren z.B.

a) das Spritzverfahren, welches mit oder ohne Anwendung von Druckluft (sog. Airless-Methode) bei Raum- oder erhöhter Temperatur (z.B. Heiß-Spritzverfahren) oder elektrostatisch durchgeführt wird,

b) das Tauchverfahren ohne Anwendung von Strom,

c) das Flutverfahren und

d) das Walzverfahren (z.B Coil Coating).

Die genannten Auftragsmethoden sind Stand der Technik und dem Fachmann bekannt. Bei der Vielfalt der Variablen ist es nicht erforderlich, Einzelheiten aufzuzeigen. Der Auftrag kann z.B. auf entfettetes bzw. chemisch vorbehandeltes, nicht grundiertes bzw. grundiertes metallisches Substrat erfolgen, ferner z.B. auf Glas und Keramik.

Die bei Anwendung der genannten Auftragsverfahren erhaltenen Überzüge werden im allgemeinen nach einer Ablüftzeit von 0 bis 30 Minuten bei Temperaturen zwischen 80°C und 300°C (die entsprechenden Zeiten betragen 60 min bzw. wenige Sekunden) in chemisch vernetzte Lackierungen übergeführt die sich z.B. durch gute Haftung auf dem Substrat, insbesondere Metallen, Härte, Elastizität, Schlagzähigkeit, Korrosionsfestigkeit und Lösungsmittelbeständigkeit auszeichnen. Die Schichtdicken variieren im allgemeinen zwischen 3 und 200 µm.

Die nach dem vorliegenden Verfahren hergestellten Überzugsmassen werden als Grundierungen, Füller oder Decklacke, bzw. Einschichtlacke für die Beschichtung angewandt. Die bevorzugte Anwendung ist die eines Füllers, vor allem in der Automobilindustrie. Unter einem Füller wird die zwischen Grundierung und Decklack befindliche Schicht verstanden.

In den folgenden Beispielen bedeutet T Gewichsteile.

## Vergleichsbeispiel 1 (gemäß EP—A1—49868)

51 T Titandioxyd, 0,6 T Ruß, 4,8 T Talkum, 0,6 T Eisenoxydgelb, 30 T Hexamethoxymethylmelaminharz mit einer dynamischen Viskosität von 6000 mPa·s bei 20°C, einer Säurezahl unter 1 (DIN 53183), einem pH-Wert von 7,7 (50%ig in Wasser) und einem Einbrennrückstand von 95% (DIN 53182), 1,5 T eines Umsetzungsproduktes aus 2 Mol Methyl-Isobutyl-Keton und 1 Mol Acetylen, 30 T deionisiertes Wasser und 30 T einer 50 %igen wäßrigen Dispersion (Viskosität etwa 2000 mPa·s bei 20°C) aus einem handelsüblichen Alkydharz (OH-Zahl 120) auf der Grundlage von Phthalsäure bzw. deren Anhydrid, einer gesättigten aliphatischen Dicarbonsäure, einem dreiwertigen Alkohol mit bis zu 6 C-Atomen und einer Fettsäure mittlerer Kettenlänge, teilweise neutralisiert mit einem tertiären Amin bis zum pH-Wert von etwa 8, wurden in einer Sandmühle (Gewichtsverhältnis Ottawa-Sand : Mahlgut = 1:1) unter Wasserkühlung 30 min bei 5000 Upm gemahlen. Zur Fertigstellung des Lackes wurden zu diesem Mahlgut zugegeben : 78 T der vorgenannten Alkydharzdispersion, 36 T Epoxydharz auf der Basis von Diphenylolpropan und Epichlorhydrin mit einem Erweichungspunkt von 93 bis 104°C nach Durrans und einem Epoxydäquivalentgewicht von 875 bis 1000 in mikronisierter Form, d.h. mit einer maximalen Teilchengröße von 15 µm (die hauptsächlich vorkommende Teilchengröße beträgt 4 µm) und 0,6 T Imidazol (in Form von 1,2 T einer 50%igen Lösung in Wasser). Abschließend wurde der Lack weitere 5 Minuten bei 5000 Upm und unter Anwendung von Wasserkühlung gemahlen.

Nach Abtrennung des Ottawa-Sandes in einem Sieb (240 µm Maschenweite) wurde ein Lack mit einer Viskosität von 20 Sekunden nach DIN 53211 und einem Festkörpergehalt von 67,8% erhalten.

## Vergleichsbeispiel 2

Vergleichsbeispiel 1 wurde wiederholt mit dem Unterschied, daß alle Komponenten am Beginn des Mahlprozesses gemeinsam eingesetzt wurden und daß das Epoxydharz eine Teilchengröße bis 1000 µm aufwies. Die Mahldauer betrug 30 Minuten bei 5000 Upm unter Anwendung von Wasserkühlung, wobei ein Lack mit einer Viskosität von 20 Sekunden (DIN 53211) und einer mittleren Teilchengröße von 5 µm erhalten wurde.

## Vergleichsbeispiel 3
(Beispiel I in Verbindung mit Beispiel B der EP—A1—15035)

49 T einer 40 %igen wäßrigen Lösung eines Maleinatöles, hergestellt aus 25 T Maleinsäureanhydrid und 75 T Sojaöl wurden mit 11 T des im Beispiel 1a) verwendeten Epoxydharzes gemischt. Dann wurden

5

41 T Titandioxyd hinzugefügt und diese Mischung anschließend auf eine Korngröße von 25 µm gemahlen. Dann wurden noch 6 T Wasser hinzugefügt. Das Gemisch hatte einen Festkörpergehalt von 66,9% und eine Viskosität nach DIN 53211 von 18 Sekunden.

Vergleichsbeispiel 4

Das Vergleichsbeispiel 3 wurde wiederholt mit dem Unterschied, daß die Lackmischung auf eine Korngröße von 5 µm gemahlen wurde.

Beispiel (erfindungsgemäß)

Vergleichsbeispiel 2 wurde wiederholt mit dem Unterschied, daß das Alkydharz gegen ein anderes Harzausgetauscht wurde, das in Form einer 50%igen wäßrigen Dispersion (Viskosität etwa 100 mPa·s bei 20°C) mit einer OH-Zahl von 50 eingesetzt wurde und das auf Basis von Phthalsäure und Trimellithsäure bzw. deren Anhydriden, einem Gemisch zwei- und dreiwertiger Alkohole mit jeweils bis zu 6 C-Atomen und einer Fettsäure mittlerer Kettenlänge, teilweise neutralisiert mit einem tertiären Amin bis zu einem pH-Wert von etwa 7 aufgebaut war. Die Viskosität des erhaltenen Lackes betrug 45 Sekunden (DIN 53211), die mittlere Teilchengröße 5 µm.

Die erhaltenen Lacke wurden im Spritzverfahren ohne Anwendung von Druckluft in bekannter Weise auf ein ebenes zinkphosphatiertes Stahlblech (Dicke 0,7 mm) in einer Schichtdicke von 50 µm aufgetragen. Nach einer Ablüftung von 10 Minuten bei Raumtemperatur (22°C) wurde die Lackierung in 30 minuten, und zwar nach der Erfindung bei 160°C und nach dem Vergleich bei 170°C im Umluft- Trockenschrank chemisch vernetzt. Die erhaltenen Lackierungen wiesen folgende Eigenschaften auf, wobei die Werte des Vergleichsbeispiels 2 und des Vergleichsbeispiels 4 nich von denen des Vergleichsbeispiels 1 bzw. Vergleichsbeispiels 3 abwichen:

| Prüfung | Vergleichsbeispiele 1 und 2 | Beispiel | Vergleichsbeispiele 3 und 4 |
|---|---|---|---|
| Haftung (DIN 53151) | GT0 | GT0 | GT0 |
| Schlagzähigkeit (ASTM D 2794—69/reverse) | 120 i.p. | 63 i.p. | 28 i.p. |
| Xylol-Festigkeit (22°C) | 40 mn | 25 mn | 10 mn |
| Elastizität (Erichsen-Tiefung) (DIN 53156) | 10 mm | 7mm | 2,5 mm |

**Patentansprüche**

1. Verfahren zur Herstellung wärmehärtbarer mit Wasser verdünnbarer Lacke auf der Grundlage von
A) 1—90 Gew.-% mindestens eines bei Raumtemperatur festen, von Aminogruppen freien Epoxydharzes
B) 10—90 Gew.-% mindestens eines Kunstharzes mit funktionellen Gruppen,
C) 0,05—40 Gew.-% mindestens eines bei Raumtemperatur festen und/oder flüssigen organischen Vernetzers und
D) 0—75 Gew.-% Pigmenten und/oder üblichen Hilfsstoffen,
wobei die Komponenten A) bis D), deren Summe stets 100 Gew.-% beträgt und deren Mengen auf lösungsmittel- oder wasserfreie Substanzen bezogen sind, in wenigstens einer Stufe gemeinsam im Naßverfahren unter Verkleinerung der ursprünglichen Partikelgröße zu einem homogenen Lack verarbeitet werden, der eine Teilchengröße von weniger als 100 µm aufweist und wobei anschließend, falls erforderlich, mit Wasser auf den für den Auftrag erforderlichen Feststoffgehalt eingestellt wird, dadurch gekennzeichnet, daß die Komponente B) mindestens ein gesättigtes säurefunktionelles, aus C, H und O bestehendes Polyesterharz oder dessen Modifikationsprodukt mit Ölen ist, wobei das Polyesterharz gegebenenfalls wenigstens teilweise mit Aminen neutralisiert ist, eine Säurezahl von mindestens 30 und im allgemeinen nicht über 120 und eine OH-Zahl von 10 bis weniger als 100 hat und die Summe von Säurezahl und Hydroxylzahl wenigstens so groß ist, daß das — gegebenenfalls wenigstens teilweise neutralisierte — Polyesterharz eine stabile wäßrige Dispersion oder Lösung bildet.
2. Verfahren nach Anspruch 1, dadurch gekennzeichnet, daß 5—50, vorzugsweise 10—40 Gew.-% der Komponente A), 10—70, vorzugsweise 15—50 Gew.-% der Komponente B), 0,1—30 Gew.-% der Komponete C) und als Komponente D) 0—70 Gew-% Pigmente und 0—5 Gew.-% andere übliche Hilfsstoffe eingesetzt werden.
3. Verfahren nach Anspruch 1 oder 2, dadurch gekennzeichnet, daß die Komponente C) aus Harzen besteht und deren Anteil 8—40, vorzugsweise 15—30 Gew.-% beträgt oder aus anderen Stoffen besteht und deren Anteil 0,05—8 Gew.-% beträgt.
4. Verfahren nach einem oder mehreren der Ansprüche 1 bis 3, dadurch gekennzeichnet, daß die

# EP 0 077 023 B2

Komponente D) feinteilige Kieselsäure in Mengen bis zu 10, vorzugsweise von 0,5—5 Gew.-% und/oder als Pigment Ruß in Mengen von nicht mehr als 10, vorzugsweise nicht mehr als 5 Gew.-% enthält.

5. Verfahren nach einem oder mehreren der Ansprüche 1 bis 4, dadurch gekennzeichnet, daß eine Teilchengröße von nicht mehr als 15, insbesonder nicht mehr ald 5 µm erzeugt wird.

6. Verfahren nach einem oder mehreren der Ansprüche 1 bis 5, dadurch gekennzeichnet, daß das Verfahren kontinuierlich durchgeführt wird.

7. Verfahren nach einem oder mehreren der Ansprüche 1 bis 6, dadurch gekennzeichnet, daß das Verfahren in wenigstens einer Stufe in Gegenwart von Wasser durchgeführt wird.

8. Verfahren nach einem oder mehreren der Ansprüche 1 bis 7, dadurch gekennzeichnet, daß der Lack mit Wasser auf einen Festkörpergehalt von 5 bis 80, insbesondere 5 bis 40 Gew.-% eingestellt wird.

9. Verwendung der nach dem Verfahren gemäß einem oder mehreren der Ansprüche 1 bis 8 erhaltenen Lacke als Überzugsmittel für die Beschichtung, insbesondere von metallischen Substraten, durch Anwendung stromloser Auftrags-Verfahren bzw. des elektrostatischen Sprühverfahrens.

## Revendications

1. Procédé pour préparer des peintures et vernis diluables à l'eau et thermodurcissables, à base:

A) de 1 à 90% en poids d'au moins une résine époxydique dépourvue de radicaux amino et solide à la température ambiante,

B) de 10 à 90% en poids d'au moins une résine synthétique à radicaux fonctionnels,

C) de 0,05 à 40% en poids d'au moins un réticulant organique solide et/ou liquide à la température ambiante et

D) de 0 à 75% en poids de pigments et/ou d'adjuvants usuels,

dont les composantes A) et D), la somme est toujours égale à 100% en poids et dont les quantités sont rapportées aux substances dépourvues de solvant ou d'eau, étant mises en œuvre en au moins un étape, par voie humide, avec réduction de la dimension d'origine des particules, de manière à obtenir une peinture homogène ayant une granularité inférieur à 100 µm, et la compositon obtenue étant ensuite, en cas de besoin, diluée avec de l'eau jusqu'à ce qu'elle ait la teneur en matière solide nécessaire pour l'application, procédé caractérisé en ce que la composante B) consiste en au moins une résine polyester saturée, à radicaux acides fonctionnels, constituée de carbone, d'hydrogène et d'oxygéne, ou en un produit résultant de la modification d'une telle résine polyester par des huiles, la résine polyester étant éventuellement neutralisée, au moins partiellement, par des amines, ayant un indice d'acide d'au moins 30 et, en général, d'au plus 120 et un indice d'hydroxy compris entre 10 et moins de 100, et la somme de l'indice d'acide et de l'indice d'hydroxy étant suffisamment élevée pour que la résine polyester, éventuellement au moins partiellement neutralisée, forme une solution ou dispersion aqueuse stable.

2. Procédé selon la revendication 1, caractérisé en ce qu'on met en jeu de 5 à 50% en poids de la composante A), de préférence de 10 à 40% en poids, de 10 à 70% en poids de la composante B), de préférence de 15 à 50% en poids, de 0,1 à 30% en poids de la composante C) et, comme composante D), de 0 à 70% en poids de pigments et de 0 à 5% en poids d'autres adjuvants usuels.

3. Procédé selon l'une des revendications 1 et 2, caractérisé en ce que la composante C) est constituée de résines, sa proportion étant alors de 8 à 40% en poids, de préférence de 15 à 30% en poids, ou est constituée d'autres substances, sa proportion étant alors de 0,05 à 8% en poids.

4. Procédé selon l'une quelconque des revendications 1 à 3, caractérisé en ce que la composante D) contient de la silice en fines particules, en une quantité pouvant aller jusqu'à 10% en poids, de préférence comprise entre 0,5 et 5% en poids, et/ou, comme pigments, du noir de carbone en une quantité au plus égale à 10% en poids de préférence au plus égale à 5% en poids.

5. Procédé selon l'une quelconque des revendications 1 à 4, caractérisé en ce qu'on crée une granularité d'au plus 15 µm, plus spécialement d'au plus 5 µm.

6. Procédé selon l'une quelconque des revendications 1 à 5, caractérisé en ce qu'il est exécuté en continu.

7. Procédé selon l'une quelconque des revendications 1 à 6, caractérisé en ce qu'il est exécuté en au moins 1 étape, en présence d'eau.

8. Procédé selon l'une quelconque des revendications 1 à 7, caractérisé en ce qu'on ajuste la peinture ou le vernis avec de l'eau, à une teneur en matière solide de 5 à 80% en poids, plus particulièrement de 5 à 40% en poids.

9. Application des peintures et vernis obtenus par un procédé selon l'une quelconque des revendications 1 à 8, comme produit de revêtement pour l'enducation, plus spécialement pour l'enduction de subjectiles métalliques, par des méthodes d'application sans courant ou par la méthode de pulvérisation électrostatique.

## Claims

1. Process for preparing heat-curable, water-dilutable coating compositions based on:

A) 1—90 weight-% of at least one epoxy resin free from amino groups and solid at ambient temperature,

7

B) 10—90 weight-% of at least one synthetic resin having functional groups, which is in the form of a solution or dispersion having a solids content of 10—90 weight-%,

C) 0.05—40 weight-% of at least one organic compound which is liquid and/or solid at ambient temeprature selected from the group of imidazole and 2-imidazoline, their derivatives and adducts with epoxy compounds, dicyan-diamide, substituted biguanides and amino resins and

D) 0—75 weight-% of pigments and/or conventional adjuvants,

whilst components A) to D), which always total is 100 weight-% and the quantities of which are referred to solvent-free or anhydrous substances, are processed together in at least one stage with comminution of the original particle size to yield a homogeneous coating composition which has a particle size of less than 100 µm and subsequently, if desired, is adjusted with water to the solids content required for application, characterized in that component B) is an aqueous dispersion or solution of saturated acid-functional polyester resins consisting of C, H and O, at least partially neutralized with amines, or of the modification products thereof with oils, the polyester resins having before neutralization an acid number of at least 30 and generally not more than 120 and an OH-number of 10 to less than 100, the sum of acid number and hydroxyl number being at least so high that the at least partially neutralized polyester resin forms a stable aqueous dispersion or solution.

2. Process as claimed in claim 1, characterized in that 5—50, preferably 10—40 weight-% of component A), 10—70, preferably 15—50 weight-% of component B), 0.1—30 weight-% of component C) and, as component D) 0—70 weight-% of pigments and 0—5 weight-% of other conventional adjuvants are used.

3. Process as claimed in claim 1 or 2, characterized in that component C) consists of resins and the proportion thereof is 8—40, preferably 15—30 weight-%, or it consists of other substances and the proportion thereof is 0.05—8 weight-%.

4. Process as claimed in one or more of claims 1 to 3, characterized in that component D) contains finely divided silicic acid in amounts up to 10, preferably from 0.5 to 5 weight-% and/or as a pigment, carbon black in amounts of not more than 10, preferably not more than 5 weight-%.

5. Process as claimed in one or more of claims 1 to 4, characterized in that a particle size of not more than 15, preferably not more than 5 µm is produced.

6. Process as claimed in one or more of claims 1 to 5, characterized in that the process is carried out continuously.

7. Process as claimed in one or more of claims 1 to 6, characterized in that the process is carried out in at least one stage in the presence of water.

8. Process as claimed in one or more of claims 1 to 7, characterized in that the coating composition is adjusted with water to have a solids content of 5 to 80, more particularly 5 to 40 weight-%.

9. Use of the coating compositions obtained by the method as claimed in one or more of claims 1 to 8, as coating agents, particularly for coating metal substrates, by the use of current-free methods of application or electrostatic spraying.